# EUROPEAN PATENT SPECIFICATION

(11) **EP 2 309 205 B1**
(45) Date of publication and mention of the grant of the patent: **26.08.2015**
(21) Application number: 09738796.3
(22) Date of filing: 27.04.2009
(51) Int. Cl.: F25B 9/00, C09K 5/04

(54) **Refrigeration circuit**
Kältekreislauf
Circuit frigorifique

(30) Priority: 30.04.2008 JP 2008118878
(43) Date of publication of application: 13.04.2011
(73) Proprietor: Sanden Corporation, Isesaki-shi Gunma 372-8502 (JP)
(72) Inventor: KOMATSU Shunji, Isesaki-shi Gunma 372-8502 (JP)
(74) Representative: Prüfer & Partner GbR European Patent Attorneys
(86) International application number: PCT/JP2009/058290
(87) International publication number: WO 2009/133859

(56) References cited:
- WO-A1-2005/103187
- WO-A2-2008/027555
- FR-A1- 2 906 877
- JP-A- 9 059 612
- JP-A- 2003 042 073
- JP-A- 2003 042 073
- JP-A- 2006 152 274
- JP-A- 2006 152 274
- JP-A- 2006 316 147
- JP-A- 2006 316 147
- JP-A- 2007 315 663
- JP-T- 2008 505 989

## Description

### Technical Field of the Invention

The present invention relates to a refrigeration circuit of an automotive air conditioning system which can be used safely even when a certain new-type refrigerant is utilized.

### Background Art of the Invention

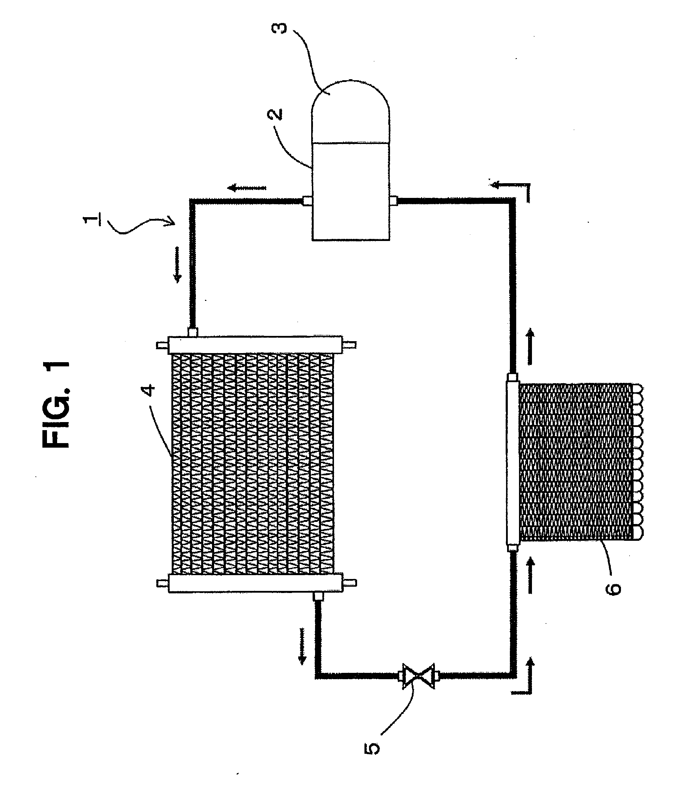

A refrigeration circuit used for an air conditioning system for vehicles has basic configuration as shown in Fig. 1. In Fig. 1, refrigeration circuit 1 is provided with compressor 2 for compressing refrigerant, condenser 4 for condensing compressed refrigerant, expansion valve 5 as a pressure-reduction/expansion means for reducing in pressure as expanding condensed refrigerant, and evaporator 6 for evaporating refrigerant which is reduced in pressure as being expanded. The refrigerant is circulated in refrigeration circuit 1 as changing in state. In such refrigeration circuit 1, a typical refrigerant, such as R134a, is used at present.

Instead of the typical refrigerant such as R134a, research and development to find a new-type refrigerant are being performed in order to improve Global Warming Potential (GWP), as disclosed in non-patent document 1. R1234yf has been announced recently as a new refrigerant aiming at such an improvement, and it is becoming possible that it is examined and studied for applying to refrigeration circuits used for an automotive air conditioning system, etc.

### Prior art documents

### Non-patent documents

Non-patent document 1: Refrigeration, Vol. 83, No. 965, March issue, 2008

### Summary of the Invention

### Problems to be solved by the Invention

Because a conventional refrigerant, such as R134a, has no double bond, no problem about a double bond has been required to be considered. However, basic molecular structure of the new-type refrigerant R1234yf described above is CF3-CF = CH2, which includes a double bond. This double bond consists of σ bond and π bond, where the π bond is generally weak against attacks from the outside. If the π bond is destroyed, the double bond might be opened, and a macromolecule of -C-C-C-C....C- might be formed by a chain reaction. Once the macromolecule has been formed, refrigerant characteristics change greatly, and the performance of the refrigeration circuit might largely deteriorate.

Radicals, such as Cl-, OH- and 03, is usually the main factor to destroy the double bond. However in the vapor-compression refrigeration cycle, the radicals are generally hard to be formed. However, when electric compressor 2 which incorporates motor 3 is used as shown in Fig. 1, the radical can be formed by high voltage in motor 3, and the π bond of the new-type refrigerant R1234yf may be attacked to open the double bond, and a macromolecule of -C-C-C-C ....C- may be formed. WO 2008/027555 discloses a refrigeration circuit according to the preamble of claim 1.

According to the above described problems, an object of the present invention is to provide a refrigeration circuit, which can perform desirably by preventing or suppressing the radical generation to prevent from polymerization of R1234yf even when the new-type refrigerant R1234yf is used, especially when a refrigerant is replaced with the new-type refrigerant R1234yf and when the radical can be formed.

### Means for solving the Problems

To solve the above-described problem, a refrigeration circuit according to the present invention is a refrigeration circuit having the features of claim 1.

It can prevent the R 1234yf polymerization by preventing or suppressing the radical generation, where the radical-capturing agent or the polymerization inhibitor is provided at a site, which is preferably the neighborhood of a site where the radical may be generated, in the refrigeration circuit.

In the refrigeration circuit according to the present invention, it is preferable that a compressor is an electric compressor having a built-in motor for driving the compressor, for example. As described above, because the radical might be generated in a site where high voltage is applied, when an electric compressor with built-in motor is used, the radical-capturing agent or the polymerization inhibitor is provided preferably at the neighborhood of a site where the high voltage is applied and the radical may be generated, in the electric compressor. Thus the R1234yf polymerization can be prevented by preventing or suppressing the radical generation.

In addition, the refrigeration circuit according to the present invention is applicable as any refrigeration circuit which may generate the radical and which may polymerize the R1234yf, as well as in the above-described case where the compressor is an electric compressor. Therefore, the present invention is applicable when the compressor is a compressor driven by an external drive source, or a belt-driven compressor which is driven by an external drive source, such as a vehicle engine, through a belt, etc., for transmitting the drive power. The present invention makes it possible that the R1234 polymerization is prevented by preventing or suppressing the radical generation.

Further, in the refrigeration circuit according to the present invention, the compressor is preferably so-called hybrid compressor, as well as an electric compressor having a built-in motor for driving the compressor. In other words, it is preferable in the refrigeration circuit of the present invention that the compressor is a compressor comprising first compression mechanism and second compression mechanism, wherein the first compression mechanism is driven by an external drive source and the second compression mechanism is driven by a built-in motor, selectively or simultaneously. Such a hybrid compressor can be included in the electric compressor for using a built-in motor as a drive source, if loosely categorized.

In the refrigeration circuit according to the present invention, the radical-capturing agent or the polymerization inhibitor is provided in the refrigeration circuit by being provided on a surface of a member for forming a circuit inner surface which is brought into contact with the refrigerant. Therefore, when the member for forming the circuit inner surface which is brought into contact with the refrigerant and on which the radical-capturing agent or the polymerization inhibitor is provided, is specifically a member in the compressor, such as the electric compressor, the radical generation can be prevented or suppressed more efficiently in an circuit inner place where the radical is likely to generate by high voltage. Further, it is possible that the radical-capturing agent or polymerization inhibitor is compounded in a material of the circuit inner surface-forming member which is brought into contact with the refrigerant. It is possible instead that the radical-capturing agent or polymerization inhibitor agent is provided on a surface of the circuit inner surface-forming member which is brought into contact with the refrigerant, by coating. Compounding it in the material of the circuit inner surface-forming member can be performed by using macromolecular material in which the radical-capturing agent or polymerization inhibitor is compounded. Providing it by coating can be performed by applying solution in which the radical-capturing agent or the polymerization inhibitor is solved or mixed in a proper solvent, which is removed.

Such a refrigeration circuit according to the present invention is basically applicable for every refrigeration circuit which uses a belt-driven compressor (compressor driven by an external drive source) or a electric compressor which aim to use the new-type refrigerant R1234yf, and is specifically suitable for a refrigeration circuit of an automotive air conditioning system required to be driven efficiently and stably for a long term.

### Effect according to the Invention

The refrigeration circuit according to the present invention makes it possible that the refrigeration circuit performs desirably by preventing or suppressing the radical generation to prevent from polymerization of R1234yf so as to make it possible to use the R1234yf stably, when the new-type refrigerant R1234yf is used and when the radical may be formed in the circuit and especially when an electric compressor to which high voltage is applied is used. Thus improvement of the Global Warming Potential (GWP), etc., can be promoted surely.

### Brief explanation of the drawings

[Fig. 1] Fig. 1 is a schematic framework showing an example of a basic equipment layout of a refrigeration circuit as an object of the present invention.

### Embodiments for carrying out the Invention

Hereinafter, the present invention, especially an illustrative embodiment of a radical-capturing agent or a polymerization inhibitor used in the present invention will be explained.

As described above, in the present invention, the new-type refrigerant R1234yf can be characterized stably for a long term as preventing the R1234yf polymerization by preventing or suppressing the radical generation, where the radical-capturing agent or the polymerization inhibitor is provided at a site, which is preferably the neighborhood of a site where the radical may be generated in the refrigeration circuit, by mixing or coating with material, or by containing directly into the refrigerant. The site where the radical may be generated is a site such as inside of an electric compressor or the neighborhood, where the radical might be generated by being applied with high voltage, but the present invention is applicable even for a belt-driven compressor (compressor driven by an external drive source). The new-type refrigerant R1234yf polymerization can be prevented by applying the present invention to any site inside the refrigeration circuit. The prevention of polymerization of the new-type refrigerant R1234yf can be achieved through the capture of the radical or by preventing the polymerization directly. However, the radical-capturing agent or the polymerization inhibitor can be actually shown without distinction, because the ultimate target of both radical capturing and direct polymerization inhibition is to prevent from polymerizing the new-type refrigerant R1234yf.

A radical-capturing agent and a polymerization inhibitor in the present invention can be shown as follows.
*2,5-Di-tert-butyl-hydroquinone (The chemical structure is shown in Chemical formula 1.)
*4,4'-Butylidene-bis-(3-methyl-6-tert-butylphenol)
   (The chemical structure is shown in Chemical formula 2.)
*Hydroquinone (The chemical structure is shown in Chemical formula 3.)
*Phenothiazine (The chemical structure is shown in Chemical formula 4.)

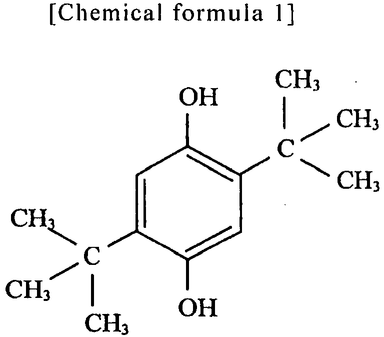

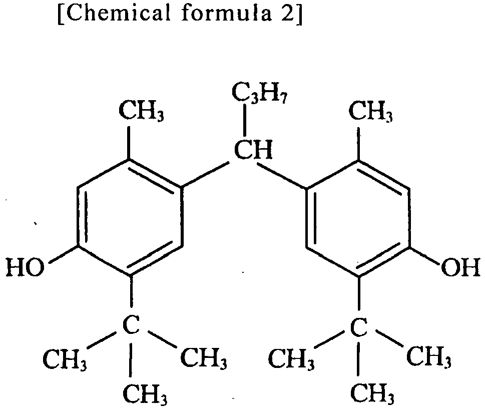

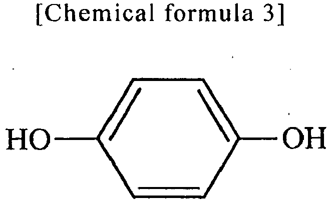

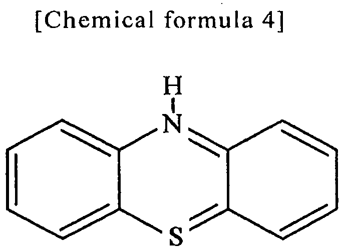

The above-described radical-capturing agent or polymerization inhibitor is provided by any of the above embodiments in any site, which is specifically a site in the electric compressor or the neighborhood, inside refrigeration circuit 1 (refrigeration circuit 1 which comprises compressor 2 for compressing refrigerant, condenser 4 for condensing compressed refrigerant, expansion valve 5 as a pressure reduction and expansion means for reducing in pressure and expanding condensed refrigerant, and evaporator 6 for evaporating pressure-reduced and expanded refrigerant) as shown in Fig. 1, when compressor 2 is an electric compressor incorporating built-in motor 3, so that the new-type refrigerant R1234yf is prevented from polymerizing as preventing or suppressing the radical generation. However, those shown in Chemical formulas 1-4 are no more than examples, so even equivalent radical scavengers or polymerization inhibitors may be used. Radical-capturing agents or polymerization inhibitors which are equivalent to Chemical formulas 1-4, are expected to prevent from polymerizing the new-type refrigerant R1234yf similarly.

### Industrial Applications of the Invention

The refrigeration circuit for a vehicle air-conditioning system according to the present invention is applicable basically for every refrigeration circuit where the new-type refrigerant R1234yf is used and the radical might be generated, and specifically suitable as a refrigeration circuit used for a vehicle air-conditioning system.

### Explanation of symbols

1: refrigeration cycle
2: compressor
3: motor
4: condenser
5: expansion valve as pressure reduction/expansion means
6: evaporator

## Claims

1. A refrigeration circuit (1) comprising a compressor (2) for compressing refrigerant, a condenser (4) for condensing compressed refrigerant, a pressure reduction and expansion means (5) for reducing in pressure and expanding condensed refrigerant, and an evaporator (6) for evaporating pressure-reduced and expanded refrigerant, wherein R1234yf is used as a refrigerant for said refrigeration circuit, and **characterized in that** a radical-capturing agent or a polymerization inhibitor is provided in said refrigeration circuit, wherein said radical-capturing agent or said polymerization inhibitor is provided in said refrigeration circuit by being provided on a surface of a member for forming a circuit inner surface which is brought into contact with said refrigerant,
wherein said radical-capturing agent or polymerization inhibitor is compounded in a material of said circuit inner surface-forming member which is brought into contact with said refrigerant or said radical-capturing agent or polymerization inhibitor agent is provided on a surface of said circuit inner surface-forming member which is brought into contact with said refrigerant, by coating.

2. The refrigeration circuit according to claim 1, wherein said compressor is an electric compressor having a built-in motor (3) for driving said compressor.

3. The refrigeration circuit according to claim 1, wherein said compressor is a compressor driven by an external drive source.

4. The refrigeration circuit according to claim 1, wherein said compressor is a compressor comprising first compression mechanism and second compression mechanism, wherein said first compression mechanism is driven by an external drive source and said second compression mechanism is driven by a built-in motor, selectively or simultaneously.

5. The refrigeration circuit according to claim 1, wherein said circuit inner surface-forming member brought into contact with said refrigerant is a member provided in said compressor.

6. The refrigeration circuit according to claim 1, wherein said refrigeration circuit is used in an air conditioning system for vehicles.

## Patentansprüche

1. Kältekreislauf (1), umfassend einen Kompressor (2) zum Verdichten von Kältemittel, einen Kondensator (4) zum Kondensieren von verdichtetem Kältemittel, eine Druckreduktions- und Expansionsvorrichtung (5) zur Druckreduktion und zur Expansion von kondensiertem Kältemittel, und einen Verdampfer (6) zum Verdampfen von druckreduziertem und expandiertem Kältemittel, wobei R1234yf als Kältemittel für den Kältekreislauf verwendet wird, und **dadurch gekennzeichnet, dass** ein Radikalfänger-Agens oder ein Polymerisationsinhibitor im Kältekreislauf bereitgestellt wird, wobei das Radikalfänger-Agens oder der Polymerisationsinhibitor im Kältekreislauf durch Bereitstellung auf einer Oberfläche eines Bauteils zur Ausbildung einer inneren Oberfläche des Kreislaufs, welche in Kontakt mit dem Kältemittel gebracht wird, bereitgestellt wird,
wobei das Radikalfänger-Agens oder der Polymerisationsinhibitor in ein Material des die innere Oberfläche des Kreislaufs ausbildenden Bauteils eingebracht ist, welche in Kontakt mit dem Kältemittel gebracht wird, oder das Radikalfänger-Agens oder der Polymerisationsinhibitor durch Beschichten auf einer Oberfläche des die innere Oberfläche des Kreislaufs ausbildenden Bauteils bereitgestellt ist, welche mit dem Kältemittel in Kontakt gebracht wird.

2. Kältekreislauf gemäß Anspruch 1, wobei der Kompressor ein elektrischer Kompressor ist, welcher einen eingebauten Motor (3) besitzt, um den Kompressor anzutreiben.

3. Kältekreislauf gemäß Anspruch 1, wobei der Kompressor ein Kompressor ist, welcher durch eine externe Antriebsquelle angetrieben ist.

4. Kältekreislauf gemäß Anspruch 1, wobei der Kompressor ein Kompressor ist, welcher selektiv oder simultan einen ersten Kompressionsmechanismus und einen zweiten Kompressionsmechanismus umfasst, wobei der erste Kompressionsmechanismus durch eine externe Antriebsquelle angetrieben ist und der zweite Kompressionsmechanismus durch einen eingebauten Motor angetrieben ist.

5. Kältekreislauf gemäß Anspruch 1, wobei das die mit dem Kältemittel in Kontakt gebrachte innere Oberfläche des Kreislaufs ausbildende Bauteil ein Bauteil ist, welches im Kompressor vorgesehen ist.

6. Kältekreislauf gemäß Anspruch 1, wobei der Kältekreislauf in einem Klimaanlagensystem für Fahrzeuge verwendet wird.

## Revendications

1. Circuit frigorifique (1) comprenant un compresseur (2) destiné à comprimer un agent réfrigérant, un condenseur (4) destiné à condenser l'agent réfrigérant comprimé, des moyens de réduction de pression et d'expansion (5) destinés à réduire la pression et à expanser l'agent réfrigérant condensé, et un évaporateur (6) destiné à permettre d'évaporer l'agent réfrigérant ayant une pression réduite et expansé, dans lequel R12354yf est utilisé en tant qu'agent réfrigérant pour le circuit frigorifique,
**caractérisé en ce qu'**
un agent permettant de capter les radicaux ou un inhibiteur de polymérisation est introduit dans le circuit frigorifique, cet agent capteur de radicaux ou cet inhibiteur de polymérisation étant introduit dans le circuit frigorifique en étant appliqué sur une surface ou un élément permettant de former une surface interne du circuit qui est mis en contact avec l'agent réfrigérant,
l'agent capteur de radicaux ou l'inhibiteur de polymérisation étant combiné par revêtement à un matériau de l'élément formant la surface interne du circuit qui est mis en contact avec l'agent réfrigérant ou l'agent capteur de radicaux ou l'inhibiteur de polymérisation sur une surface de l'élément formant la surface interne du circuit qui est mise en contact avec l'agent réfrigérant.

2. Circuit frigorifique conforme à la revendication 1, dans lequel le compresseur est un compresseur électrique comprenant un moteur intégré (3) pour permettre d'entraîner le compresseur.

3. Circuit frigorifique conforme à la revendication 1, dans lequel le compresseur est un compresseur entraîné par une source d'entraînement externe.

4. Circuit frigorifique conforme à la revendication 1, dans lequel le compresseur est un compresseur comprenant un premier mécanisme de compression et un second mécanisme de compression, le premier mécanisme de compression étant entraîné par une source d'entraînement externe et le second mécanisme de compression étant entraîné par un moteur intégré, sélectivement ou simultanément.

5. Circuit frigorifique conforme à la revendication 1, dans lequel l'élément formant la surface interne du circuit mis en contact avec l'agent réfrigérant est un élément présent dans le compresseur.

6. Circuit frigorifique conforme à la revendication 1, dans lequel le circuit frigorifique est utilisé dans un système de climatisation de véhicules.
